Europäisches Patentamt

European Patent Office

Office européen des brevets

(11) Publication number: **0 181 595**
A2

# (12) EUROPEAN PATENT APPLICATION

(21) Application number: **85114062.4**

(22) Date of filing: **05.11.85**

(51) Int. Cl.⁴: **C 03 C 13/04**

(30) Priority: **15.11.84 US 671758**

(43) Date of publication of application:
**21.05.86 Bulletin 86/21**

(84) Designated Contracting States:
**AT BE CH DE FR GB IT LI NL SE**

(71) Applicant: **POLAROID CORPORATION**
**549 Technology Square**
**Cambridge, Massachusetts 02139(US)**

(72) Inventor: **Snitzer, Elias**
**56 Ivy Road**
**Wellesley, MA 02181(US)**

(74) Representative: **Koch, Günther, Dipl.-Ing. et al,**
**Postfach 920**
**D-8000 München 33(DE)**

(54) **Dielectric waveguide with chlorine dopant.**

(57) An optical fiber of stepped index of refraction. The fiber core is of fused silica to which chlorine has been added to raise index and lower both its viscosity and hydroxyl ion content. Cladding composition is of either pure fused silica or fused silica to which a dopant, preferably fluorine, has been added.

EP 0 181 595 A2

## BACKGROUND OF THE INVENTION

This invention in general relates to dielectric waveguides and, in particular, to optical fibers for use in communications.

Since the middle sixties, a great deal of research and development on glass optical fibers has been done and has resulted in practical fibers which are now routinely used in the communications industry for the transmission of information over both long and short distances. Motivating this rapid progress, largely developments in materials and fabrication methods, has been the recognition that fibers offer significant advantages over conventional metallic cables by virtue of their very high information carrying capacity and low transmission losses. They are also far more compact and lightweight, thereby affording great economic benefits in reduced manufacturing and installation costs.

Structurally, optical fibers are thin filaments of glass having a central region of high index of refraction, or high effective index of refraction where the index varies, surrounded by a sheath or cladding region of lower index. Suitably configured, this kind of glass structure causes optical radiation properly injected into one fiber end to propagate along the length of the fiber and emerge from its other end.

The performance of optical fibers for communications is chiefly determined by optical loss or attenuation and by the dispersion experienced by radiation propagating along the fiber length. Losses are caused by

-1-

absorption, scattering, and imperfect geometry or structural defects, and dispersion, which causes a reduction of bandwith, is of two types. One type of dispersion, due primarily to the material itself, is a variation in refractive index with wavelength, and the other is referred to as modal dispersion because it is due to differences in the optical path lengths encountered by different transmission modes in which light propagates along the fiber.

For optical fibers to be competitive with copper wire based systems in transmitting high data rates over long distances, they must have low transmission losses and produce low signal distortion. In order to obtain such high quality optical fibers, extremely pure glasses are required since even traces of certain impurities such as Fe or Cu increase attenuation drastically. For wide band transmission with multimode fiber, it is necessary to carefully control refractive index profile. For single mode fibers, the important relationship is the dispersion as a function of wavelength.

To meet these requirements, those skilled in the art have developed various techniques by which optical fibers can be successfully fabricated. These techniques are, by and large, based upon the formation of silica based glass from appropriate glass precursor vapors. Techniques used have been the soot process (U.S. Patent Nos. 3,711,262 and Reissue 28,029); the modified chemical vapor deposition process (U.S. Patent No. 4,217,027); and the vapor axial deposition process (U.S. Patent Nos. 3,966,446; 4,135,901 and 4,224,046). As a result of these processes and improvements over them, optical fibers are now routinely fabricated in commercial processes with losses less than two db/km in certain parts of the optical region of the spectrum.

One example of a significant improvement over processes which relied on the external deposition of soots from vapor phase precursors to form preforms from which fibers are drawn was to reduce the inherent hydroxyl ion (OH) content to levels sufficiently low not to present a problem of undue absorption in wavelength regions of interest. Prior to this improvement, it was known that a successful fiber of low attenuation required the hydroxyl ion content to be below a few parts per million because of the existance of undesirable OH absorption at overtones of the fundamental stretching vibration of OH centered around 2.8 microns. These overtones give rise to absorptions at 1.4 microns and 970 and 750 nm and thus interfere with a transmission band of interest in glass. Thus, the OH ion which was ever present in such processes had to be precluded from the final fiber if low transmission losses were to be attained. The elimination of the OH ion was a particularly vexing problem for the industry because of its presence in undesirable quantities in most of the vapor phase processes. To solve this problem, chlorine has been used as a drying agent to remove the OH ion from preforms made from flame hydrolysis as shown and described in U.S. Patent No. 3,933,454. Fluorine has also been proposed as a drying agent as shown and described in U.S Patent No. 4,065,280 and as a dopant in a fiber for purposes of reducing hydroxyl ion content as shown and described, for example, in U.S. Patent No. 4,441,788. In addition, fluorine has been used to reduce cladding index (U.S. Patent No. 4,082,420).

To improve transmission bandwidth, those skilled in the art chose to use single mode fibers rather than multimode fibers because the use of single mode fibers eliminated or virtually eliminated dispersion manifested as pulse spreading due to differences in optical path length between the various modes propagating in a multimode fiber, and to material dispersion as well.

Initial fabrication of single mode fibers was of the step index type in which the core was of uniform index of refraction and the cladding was primarily of a uniform lower index of refraction. Early fibers comprised silica cores with doped claddings of, for example, borosilicate and later fluorosilicate. Later fibers included cores of, for example, germania silicate and silica claddings. However, these designs require the high temperatures necessary to process deposited pure silica.

The later fibers included germania silicate cores and phosphosilicate claddings. Phosphorus in the cladding simplifies the manufacturing process because it lowers the melting temperature of silica. Furthermore, the removal of boron from the fiber, whose presence likewise simplifies manufacturing due to lowered melting temperatures, avoids the. relatively low wavelength infrared absorption edge associated with borosilicate glasses.

In spite of the many innovations made in this art, improved fiber material structures and manufacturing processes are still needed to assure low loss and low dispersion which, in turn, translate into long distances between repeaters and to high telecommunications capacity. Furthermore, ease of manufacture and the use of low cost materials are important considerations. Accordingly, it is a primary object of the present invention to provide a single mode optical fiber of low attenuation and dispersion and of favorable characteristics for fabrication.

Other objects of the invention will, in part, be obvious and will, in part, appear hereinafter. The invention accordingly comprises the optical fiber possessing the construction and material composition exemplified in the detailed disclosure which follows.

## SUMMARY OF THE INVENTION

This invention in general relates to dielectric waveguides and in particular to the construction of an optical fiber suitable for use in communications systems operating in the optical region of the spectrum.

The optical fiber of the invention is preferably single mode of stepped index intended to operate at wavelengths within the region encompassing the visible and near infrared where minimum absorption and suitable sources exist.

The core is fabricated of fused silica ($SiO_2$) to which chlorine has been added to increase index of refraction and lower both hydroxyl ion content and viscosity.

Cladding is either of pure fused silica or fused silica to which fluorine has been added to lower index, viscosity, and water content.

The fiber can be drawn from a preform fabricated by any of known chemical vapor deposition methods.

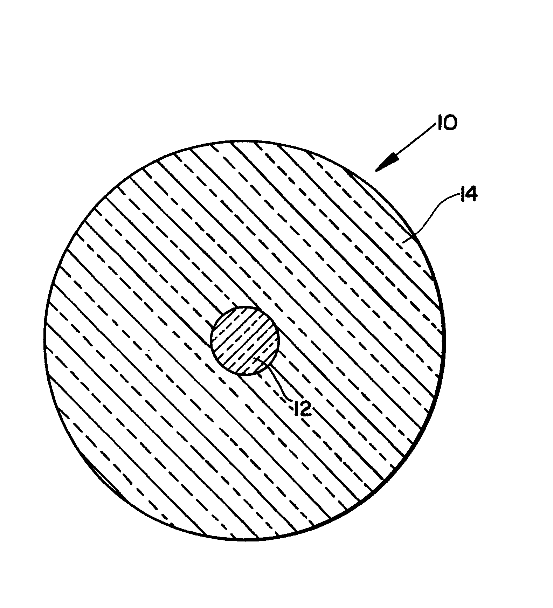

## BRIEF DESCRIPTION OF THE DRAWING

The novel features that are considered characteristic of the invention are set forth with particularity in the appended claims. The invention itself, however, both as to its structure and method of operation, together with other objects and advantages thereof, will be best understood from the following description of the illustrated embodiment when read in connection with the accompanying cross-sectional drawing of the invention.

## DETAILED DESCRIPTION

The optical fiber of the present invention is preferably single mode and of stepped index having a cross-section as shown in the figure where the fiber is designated at 10. As seen there, fiber 10 comprises a

-5-

core 12 of uniform index of refraction surrounded by a uniformly thick cladding layer 14 whose index of refraction is also uniform and lower than that of the core 12. The radius of the core 12, the indices of refraction of core 12 and cladding 14, and the wavelength at which the fiber 10 is intended to operate can take on a range of values, but the values within the range are related in a well-known way by the following equation governing single mode propagation, i.e.,

$$2\pi (a/\lambda)(n_1{}^2-n_2{}^2)^{1/2} < 2.405,$$

where $a$ = core radius, $\lambda$ is wavelength, $n_1$ and $n_2$ are core and cladding indices of refraction, and 2.405 is a constant whose value is the first root of the $0^{th}$ order Bessel function. Thus, these fiber parameters can be conveniently chosen from a sensible range of values but, as the equation shows, cannot be selected independently of one another. Typically, the core radius will be 10 micrometers or less, the numerical aperture, (N.A. = $\sqrt{n_1{}^2-n_2{}^2}$), will be within the range between 0.1 and 0.2, and $\lambda$ preferably is within the visible and near infrared regions of the spectrum where low absorption windows and suitable light sources exist. Other fiber geometries are possible while still having single mode propagation, but where the core becomes noncircular, the above equation becomes an approximation to actual behavior and hence must be treated appropriately.

The nominal cladding diameter is preferably in accordance with accepted industry practices and, therefore, would be within the range from 50 to 150 micrometers.

Fiber 10 is drawn in a conventional manner, but from a preform fabricated in a manner to be described to be substantially free of hydroxyl ions and to have both core and cladding of low viscosity so that drawing can take place at lower temperatures than those required for pure $SiO_2$.

The composition of the core 12 is pure fused silica ($SiO_2$) doped with chlorine to reduce its hydroxyl ion content, lower its viscosity, and increase its index of refraction by virtue of the presence of $Cl^-$ in place of some of the $O^{-2}$ in the glass network. The rise in index here is believed to be due to the higher electronic polarizability of two chlorine ions over one oxygen ion.

Cladding 14 can be of either pure fused silica ($SiO_2$) or fused silica to which a dopant has been added to alter its index and/or change its viscosity to more nearly match that of the core 12. Preferably, fluorine is added to the cladding to lower its index relative to the core's and to lower its viscosity.

One procedure that can be used to fabricate the preform from which the fiber 10 is to be drawn requires first forming a consolidated rod of the material composition of the core and then inserting this rod into a consolidated tube of the material composition of the cladding and then collapsing the tube and cladding in an appropriate atmosphere which tends to maintain the fluorine levels in the cladding 14.

The rod is prepared by first depositing $SiO_2$ soot on a mandrel of suitable composition via an outside vapor deposition method (OVD) by burning silicon tetrachloride ($SiCl_4$) in an oxygen-hydrogen flame that is produced in front of a burner nozzle which is directed at the mandrel as it is rotated in a controlled way. After deposition of the required thickness of silica soot, the mandrel is removed and the porous soot is placed into a dehydration and consolidation furnace where the soot is heated to approximately 1,000°C in a partial chlorine atmosphere to remove residual water. After this drying step, chlorine is diffused into the soot by subjecting it to further heat treatment in a chlorine and helium containing atmosphere. After an appropriate time and while still in a chlorine and helium atmosphere, the soot is raised to a temperature of 1,600°C to coalesce the soot cylinder into a solid fully compacted cylinder without any voids. The resultant tube is then drawn down into a solid rod in an atmosphere of chlorine and helium to produce a rod stock for the core while not allowing any of the chlorine to boil away. This drawn rod is then cut up into smaller sections, each to be used as core rod. The percentage of chlorine present with helium depends on the required index change, and this is determined experimentally, depending exactly on the duration of the diffusion period, temperature, partial pressure and concentration of chlorine.

The fluorine doped tube is made by a process which is similar to that for fabricating the core rod. Here, one starts with a tube of high quality silicon dioxide or other material suitable to function as a mandrel and then deposits on the outside of this tube with a chemical vapor deposition method a soot of pure fused silica. After deposition of the required thickness of soot, the mandrel is then removed, and the remaining soot tube thermally treated in a gaseous atmosphere containing chlorine as before for dehydration purposes and then fluorine. Both enter the porous $SiO_2$ layer and replace the OH ions located there. This partially fluorinated soot tube is then subjected to a higher heat treatment in a fluorine and helium containing atmosphere during which the soot layer is coalesced into a solid fully compacted fluorinated layer without any voids. Afterwards, the tubular mandrel is removed.

The core rod is inserted inside of the fluorinated tubular layer, and both are then placed in a fluorine containing atmosphere and then raised to a temperature where the two collapse and fuse. Having done this, one then has a preform from which the fiber 10 is drawn in a conventional manner or else the tube is collapsed onto the rod during the drawing process.

Thus, the fiber 10 is comprised of a core which is doped with chlorine and therefore, because of the dehydration properties of chlorine, has a low OH or water content, thereby providing it with extremely low loss characteristics on the order of 0.2 db/km at the wavelength at which it will be operated, preferably 1.55 micrometers. The small difference in index between the core and the cladding also permits the numerical aperture to be relatively small, thereby providing a convenient size for the core diameter, a desirable property for a single mode fiber. In addition, the cladding, containing fluorine doping, is of extremely low loss quality.

It will be obvious to those skilled in the art that other changes may be made in the above-described embodiment without departing from the scope of the invention. For example, it is entirely possible to construct the tube by using an inside vapor deposition process and afterwards heat treating in a fluorine atmosphere to dope the pure silica soot created in this way. If this is done, then no coring is required and the final fiber structure has an additional layer beyond the cladding, and this layer is of the quality of the tube which serves as the mandrel. In addition, there appears to be no reason why chlorine cannot be employed as a dopant to raise index of refraction in multimode fibers and planar waveguides where appropriate. Consequently, it is intended that all matter contained in the above description or shown in the accompanying drawing shall be interpreted as illustrative and not in a limiting sense.

What is claimed is:

1. An optical waveguide comprising a cladding layer formed of a material selected from the group consisting of pure fused silica and fused silica to which a dopant material has been added and a core formed of fused silica to which chlorine has been added in an amount sufficient to raise the index of refraction of said core above that of said cladding layer.

2. The optical waveguide of claim 1 wherein said dopant material comprises fluorine to lower the index of refraction of said cladding layer.

3. The invention of claim 1 wherein said optical waveguide comprises an optical fiber in which said cladding layer surrounds said core.

4. A single mode optical fiber comprising a core formed of fused silica to which chlorine has been added to raise the index of refraction of said core and to lower its viscosity compared to what said chracteristics would be absent chlorine and a cladding surrounding said core and formed of a material selected from the group consisting of pure fused silica or fused silica to which a dopant has been added to lower the index of refraction of said cladding below that of said core.

5. The optical fiber of claim 4 wherein said cladding dopant comprises fluorine.